# EUROPEAN PATENT APPLICATION

(11) **EP 1 439 464 A2**
(43) Date of publication of application: **21.07.2004**
(21) Application number: 03256913.9
(22) Date of filing: 31.10.2003
(51) Int. Cl.: G06F 9/44

(54) **Java interface for accessing graphical user interface-based java tools**

(30) Priority: 14.11.2002 US 295525
(71) Applicant: Sun Microsystems, Inc., Santa Clara, CA 95054 (US)
(72) Inventor: Flynn, Martin D., Grass Valley, California 95949 (US); Mehta, Chinmay S., San Jose, California 95134 (US)
(74) Representative: Collins, John David

(57) **Abstract**

Techniques for accessing Java-based tools are disclosed. The Java tools provide a Graphical User Interface (GUI) which can be used to perform various operations in a Java computing environment. Typically, these operations are performed by a user with respect to one or more Java components. A Java programming interface is disclosed. The Java programming interface can be used to access the graphical user interface of a Java tool. As such, the Java programming interface can be used to simulate operations that can be performed using the GUI of the Java tool. This allows implementation of many programs for various applications. These applications, for example, include automated testing and tutorials for the GUI-based tools.

## Description

### BACKGROUND OF THE INVENTION

The present invention relates generally to Java computing environments and, more particularly, to techniques for accessing Java tools which operate in Java computing environments.

One of the goals of high level languages is to provide a portable programming environment such that the computer programs may easily be ported to another computer platform. High level languages such as "C" provide a level of abstraction from the underlying computer architecture and their success is well evidenced from the fact that most computer applications are now written in a high level language.

Portability has been taken to new heights with the advent of the World Wide Web ("the Web"), which is an interface protocol for the Internet which allows communication of diverse computer platforms through a graphical interface. Computers communicating over the Web are able to download and execute small applications called applets. Given that applets may be executed on a diverse assortment of computer platforms, the applets are typically executed by a Java™ virtual machine.

Recently, the Java programming environment has become quite popular. The Java programming language is a language that is designed to be portable enough to be executed on a wide range of computers ranging from small devices (e.g., pagers, cell phones and smart cards) up to supercomputers. Computer programs written in the Java programming language (and other languages) may be compiled into Java Bytecode instructions that are suitable for execution by a Java virtual machine implementation. The Java virtual machine is commonly implemented in software by means of an interpreter for the Java virtual machine instruction set but, in general, may be software, hardware, or both. A particular Java virtual machine implementation and corresponding support libraries together constitute a Java runtime environment.

Computer programs in the Java programming language are arranged in one or more classes or interfaces (referred to herein jointly as classes or class files). Such programs are generally platform, i.e., hardware and operating system, independent. As such, these computer programs may be executed without modification on any computer that is able to run an implementation of the Java runtime environment.

Object-oriented classes written in the Java programming language are compiled to a particular binary format called the "class file format." The class file includes various components associated with a single class. These components can be, for example, methods and/or interfaces associated with the class. In addition, the class file format can include a significant amount of ancillary information that is associated with the class. The class file format (as well as the general operation of the Java virtual machine) is described in some detail in The Java Virtual Machine Specification, Second Edition, by Tim Lindholm and Frank Yellin.

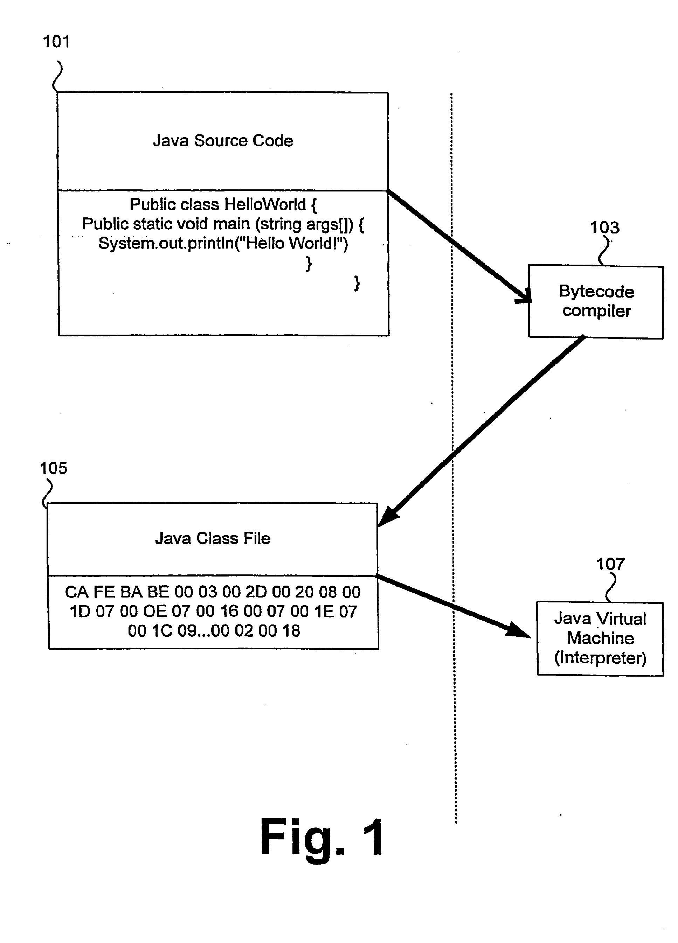

Fig. 1A shows a progression of a simple piece of Java source code through execution by an interpreter, the Java virtual machine. Java source code 101 includes the classic Hello World program written in Java. The source code is then input into a Bytecode compiler 103 that compiles the source code into Bytecodes. The Bytecodes are virtual machine instructions as they will be executed by a software emulated computer. Typically, virtual machine instructions are generic (*i*.*e*., not designed for any specific microprocessor or computer architecture) but this is not required. The Bytecode compiler outputs a Java class file 105 that includes the Bytecodes for the Java program. The Java class file is input into a Java virtual machine 107. The Java virtual machine is an interpreter that decodes and executes the Bytecodes in the Java class file. The Java virtual machine is an interpreter, but is commonly referred to as a virtual machine as it emulates a microprocessor or computer architecture in software (e.g., the microprocessor or computer architecture may not exist in hardware).

The Java programming environment can provide a component-based environment. For example, the Java 2 Platform Enterprise Edition (J2EE) developed by Sun Microsystems provides a component-based approach to the design, development, assembly and deployment of enterprise applications. The J2EE platform stresses the practical aspects of enterprise development by minimizing the need to modify code in order to deploy applications. On the server side, the J2EE platform includes two major containers: the web container and the Enterprise JavaBeans (EJB) server. The web container provides the functionality to support servlet and JavaServer Pages (JSP) technology. The EJB server provides the underpinnings to support Enterprise JavaBeans technology.

The component-based environment of the J2EE platform can be a complex environment with many components. As such, a deployment tool has been developed which can perform the actual installation of the EJB components and the additional classes and interfaces into the EJB container operational environment. The Deployer is an expert at a specific operational environment and is responsible for the deployment of EJB components. The Deployer provides a GUI which can be used to conveniently perform tasks. However, even with a sophisticated GUI-based tool, assembling and deploying an EJB technology-based application can be a complex process. Moreover, with the growing complexity of the Java environment, the task of testing and/or using the deployment tool itself has become an important issue.

Accordingly, techniques for accessing GUI-based Java tools are needed.

### SUMMARY OF THE INVENTION

Broadly speaking, the present invention relates to techniques for accessing GUI based Java tools. These tools provide a Graphical User Interface (GUI) which can be used to perform various operations in Java computing environments. Typically, a user interacts with the GUI to perform these operations with respect to one or more java components.

In accordance with one aspect of the invention, a Java programming interface is disclosed. The Java programming interface can be used to access the GUI of a Java tool. As such, the Java programming interface can be used to simulate operations that can be performed by users who interact with the GUI of a Java tool. This allows implementations of many programs for various applications. These applications, for example, include automated testing suites which can be used to test the GUI-based tools, as well as tutorials which can be provided for the users of these tools.

The invention can be implemented in numerous ways, including as a method, an apparatus, a computer readable medium, and a database system. Several embodiments of the invention are discussed below.

One embodiment of the invention can be implemented as a Java Programming Interface capable of interacting with a Java GUI-based tool in a Java computing environment. The Java GUI-based tool provides a GUI which can be used to perform one or more operations relating to one or more components operating in the Java computing environment. Furthermore, the Java Programming Interface provides at least one functionality which can be used to perform at least one operation associated with interaction with the GUI of the Java GUI-based tool. It should be noted that the at least one operation can also be performed by interacting with said GUI of said Java GUI-based tool.

Another embodiment of the invention can be implemented as a computing system which is capable of using a Java Programming Interface suitable for interaction with a Java deployment tool in a Java computing environment. The Java deployment tool provides a GUI which can be used to perform one or more operations relating to one or more components in the Java computing environment. it should be noted that the one or more operations include deployment of said one or more components in said Java computing environment and the Programming Interface provides at least one functionality which can be used to perform at least one operation relating to deployment of the one or more components. It should also be noted that at least one operation can also be performed by a user of said Java deployment tool by interacting with said GUI.

As a computer readable medium including computer program code for a Java Programming Interface, one embodiment of the invention can be used to interact with a Java deployment tool in a Java computing environment. The Java deployment tool provides a GUI which can be used to perform one or more operations relating to one or more components in the Java computing environment. The one or more operations include deployment of the one or more components in the Java computing environment and the Java Programming Interface provides at least one functionality which can be used to perform at least one operation relating to deployment of the one or more components. Again, it should also be noted that at least one operation can also be performed by a user of said Java deployment tool by interacting with said GUI.

These and other aspects and advantages of the present invention will become more apparent when the detailed description below is read in conjunction with the accompanying drawings.

### BRIEF DESCRIPTION OF THE DRAWINGS

The present invention will be readily understood by the following detailed description in conjunction with the accompanying drawings, wherein like reference numerals designate like structural elements, and in which:
Fig. 1 shows a progression of a simple piece of Java source code through execution by an interpreter, the Java virtual machine.
Fig. 2 illustrates a Java computing environment including a Java-based tool in accordance with one embodiment of the invention.
Fig. 3 illustrates a Java computing environment including a Java deployment tool in accordance with one embodiment of the invention.
Fig. 4 depicts an exemplary sequence of screens which can be generated using the Java-based programming interface in accordance with one embodiment of the invention.
Fig. 5A depicts an exemplary screen in accordance with one embodiment of the invention.
Fig. 5B depicts an exemplary screen in accordance with another embodiment of the invention.
Fig. 6A-B illustrate programming scripts in accordance with various embodiments of the invention.

### DETAILED DESCRIPTION OF THE INVENTION

As noted in the background, techniques for accessing GUI-based Java tools are needed. Accordingly, the present invention pertains to techniques for accessing GUI-based Java tools. These tools provide a Graphical User Interface (GUI) which can be used to perform various operations in a Java computing environment. Typically, a user interacts with the GUI to perform these operations with respect to one or more Java components.

In accordance with one aspect of the invention, a Java programming interface is disclosed. The Java programming interface can be used to access the GUI of a Java tool. As such, the Java programming interface can be used to simulate operations that can be performed by users who interact with the GUI of a Java tool. This allows implementations of many programs for various applications. These applications, for example, include automated testing suites which can be used to test the GUI-based tools, as well as tutorials which can be provided for the users of these tools.

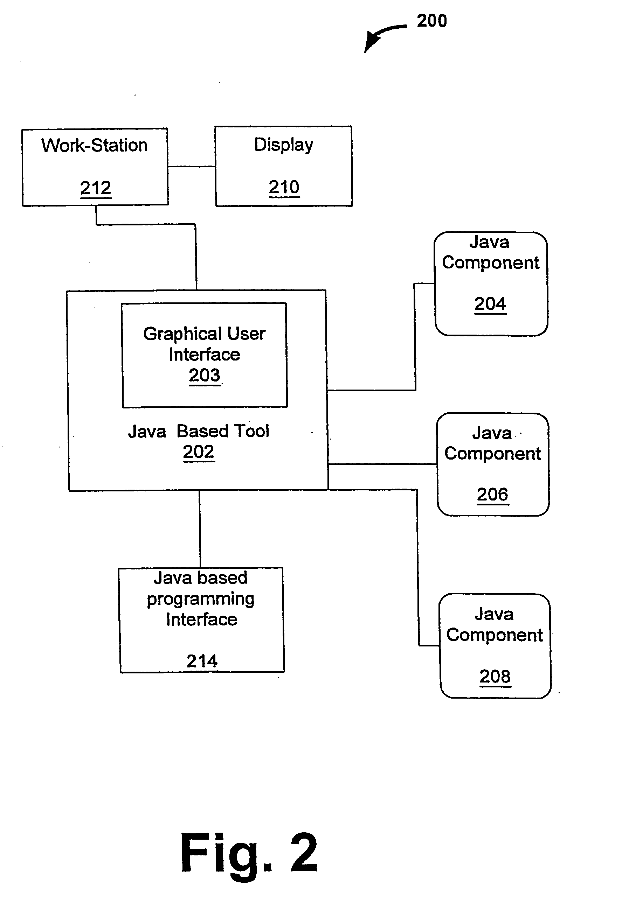

Embodiments of the invention are discussed below with reference to Figs. 2-6B. However, those skilled in the art will readily appreciate that the detailed description given herein with respect to these figures is for explanatory purposes only as the invention extends beyond these limited embodiments.

Fig. 2 illustrates a Java computing environment 200 including a Java-based tool 202 in accordance with one embodiment of the invention. The Java-based tool 202 provides a Graphical User Interface (GUI) 203 which allows a user to conveniently access its functionality. Typically, the Java-based tool 202 can be used to perform tasks related to one or more Java components 204, 206 and 208. The Graphical User Interface (GUI) 203 of the Java-based tool 202 can operate to display information on a display 210 associated with a work-station 212. In this way, the user can perform tasks by interacting with the Graphical User Interface 203 which is displayed on the display 210.

As shown in Fig. 2, a Java-based Programming Interface (PI) 214 can be provided in accordance with one embodiment of the invention. As will be appreciated, the Programming Interface (PI) 214 provides an interface to the Java-based tool 202 which can be used to perform a variety of tasks related to the Graphical User Interface 203. These tasks, for example, include writing programs which can be used as a test or a tutorial for the Java-based tool 202.

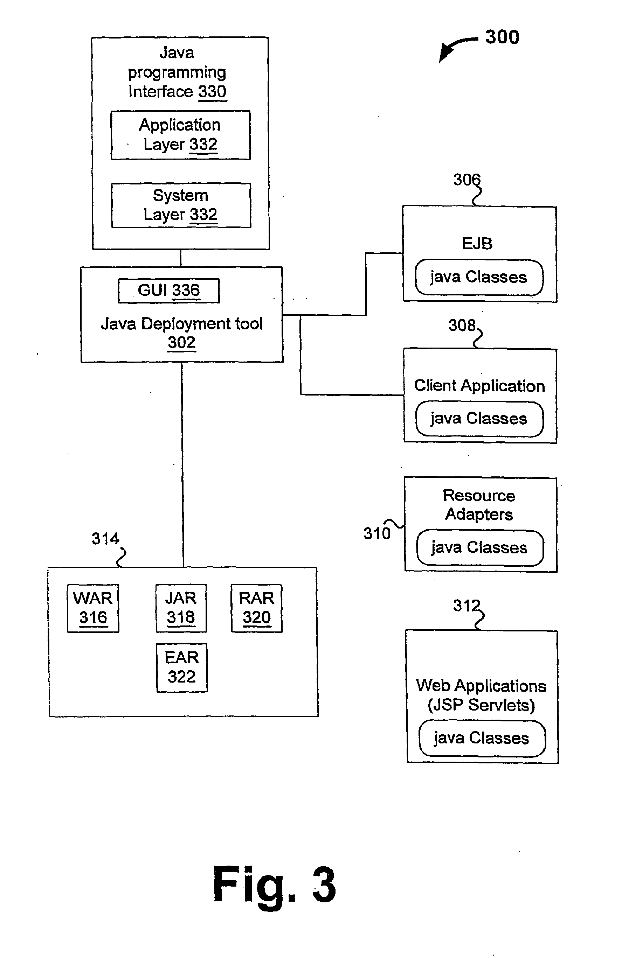

Fig. 3 illustrates a Java computing environment 300 including a Java deployment tool 302 in accordance with one embodiment of the invention. The deployment tool 302 can perform a variety of tasks in the Java computing environment 300. These tasks, for example, include the installation of: an EJB component 306, a client application 308, resource adapters 310 and Web applications (JSP Servlets) 312. It should be noted that the deployment tool 302 can interact with Java classes and/or interfaces associated with these components. As such, the Java deployment tool 302 is an expert tool in the specific operational environment 300 and is responsible for the deployment of various Java components which operate in this environment. During operation, the deployment tool 302 can generate one or more output files which typically reside on a server 314 (e.g., Web Archive file (WAR) 316, Java Archive file (JAR) 318, Resource Archive file (RAR) 320, Enterprise Archive file (EAR) 322, etc.).

As illustrated in Fig. 3, a Java-based programming interface 330 has been provided for the Java deployment tool 302. The Java-based programming interface 330 includes a Java application layer 332 and a Java system layer 334. As will be appreciated, the two layer design of the Java-based programming interface 330 provides a level of abstraction which allows the application layer to hide the complexities associated with performing tasks at the system level.

As shown in Fig. 3, the Java system layer 334 interacts with the GUI 336 of the Java deployment tool 302. As such, the Java-based programming interface 330 can be used to develop programs capable of performing a variety of tasks. These tasks, for example, include developing test scripts and tutorials for the Java deployment tool 302. The test scripts can be used, for example, to provide an automated environment where the Java deployment tool 302 can be conveniently tested. Similarly, the Java-based programming interface 330 can be used to develop programming scripts for tutorials. These tutorials can be used to educate the user about the Java deployment tool 302. This can be achieved, for example, by providing programming scripts that can show the user how to perform a given task. Moreover, the user can step through the tutorials at his or her own pace. This allows novice users to learn about the capabilities of the Java deployment tool 302 step by step while reading the useful information that is provided.

As noted above, the Java-based programming interface 330 interacts with the GUI 336 of the Java deployment tool 302. Typically, performing a task using the Java deployment tool 302 requires the user to interact with one or more screens which are generated by the GUI 336. Accordingly, the Java-based programming interface 304 can be used to simulate the user interactions with the GUI 336. This simulation can be used, for example, to test the Java deployment tool 302. Furthermore, the Java-based programming interface 330 can be used to provide input to the GUI 336 so that particular screens are presented to the user at desired times. Similarly, based on user input, a desired action can be taken. For example, after the user selects a "continue" option, a new screen can be generated. As another example, when the user selects a "help" option, information regarding the screen that is currently being displayed can be provided. In this way, the Java-based programming interface 330 can be used to provide an interactive controlled environment which can, for example, be used to provide useful tutorials for the Java deployment tool 302.

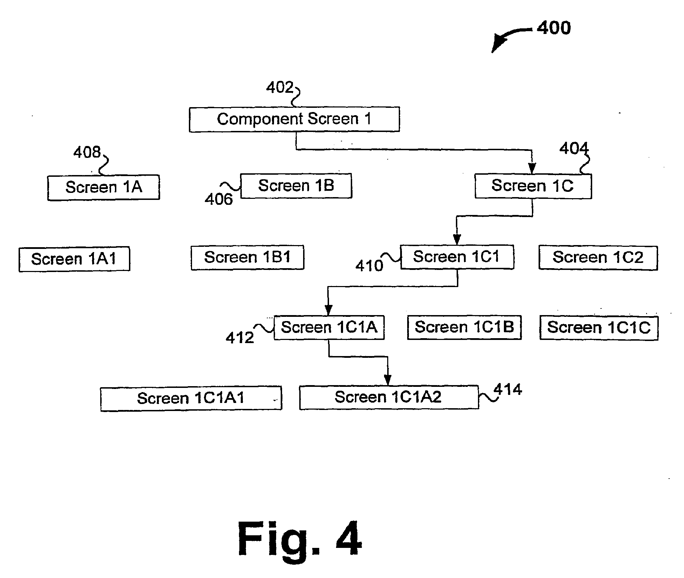

In any case, user interaction with the GUI 336 can be represented by a series of screens. To illustrate, Fig. 4 depicts an exemplary sequence of screens 400 which can be generated using the Java-based programming interface 304 in accordance with one embodiment of the invention. The exemplary sequence of screens 400 represents the screens which are generated when one or more tasks are performed using a GUI of a GUI-based Java tool (e.g., using the Java deployment tool 302 via the GUI 336). As such, the exemplary sequence of screens 400 can, for example, represent a series of screens which are generated when a test script or tutorial script is executed.

Initially, a screen 402 is generated. The screen 402 can, for example, be general screen (or tab). Next, a screen 404 is generated. It should be noted that screen 404 is one of the screens that may be generated from screen 402. In other words, screen 406 or 408 may be selected in another programming sequence. Similarly, a screen 410 is generated after generation of screen 404. Thereafter, screens 412 and 414 are generated in the sequence 400.

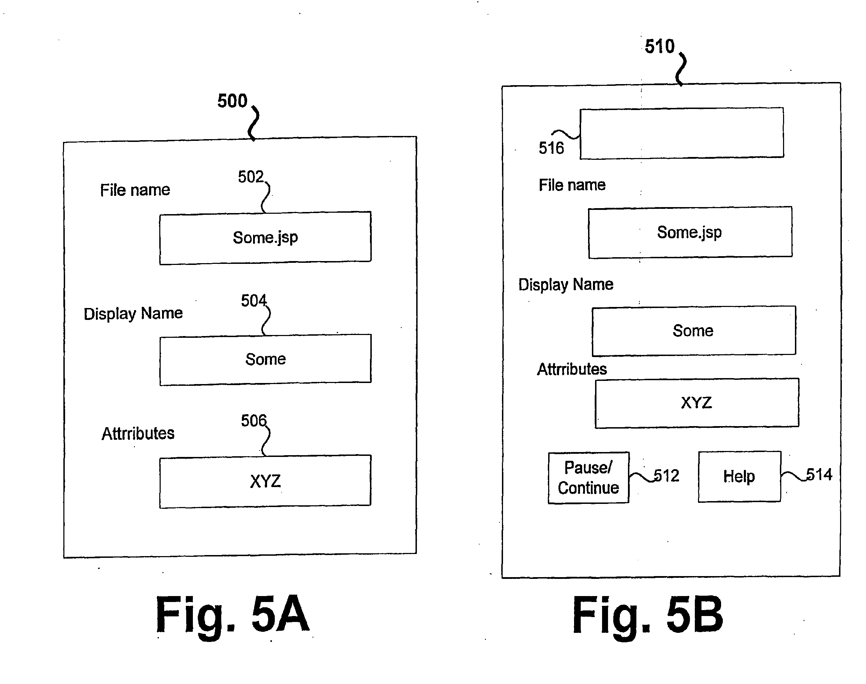

To further illustrate, Fig. 5A depicts an exemplary screen 500 in accordance with one embodiment of the invention. The exemplary screen 500 can, for example, represent a screen in the sequence of screens 400 of Fig. 4. It should be noted that the exemplary screen 500 can, for example, be generated using the Java-based programming interface 304 of Fig. 3. As shown in Fig. 5A, screen 500 includes display portions 502, 504, and 506 representing various fields associated with the screen 500. As will be appreciated, these fields can be set to various values using the Java-based programming interface 304. As such, various testing scenarios can be developed to test the Java deployment tool 302. Fig. 5B depicts an exemplary screen 510 in accordance with another embodiment of the invention. As shown in Fig. 5B, screen 510 includes selectable options 512 and 514 which allow the user to interact with a programming script during execution. By way of example, the pause/continue option 512 can be selected by the user to pause/continue the execution of a tutorial which is developed for the Java deployment tool 302. Similarly, selection of the help option 514 can provide the user with information regarding a desired topic. In addition, general information regarding the screen 510 can be displayed in display portion 516 during the tutorial.

As illustrated in Fig. 3, the Java-based programming interface 330 includes an application layer 332 and a system layer 334. As noted above, the two layer design of the Java-based programming interface 330 provide a level of abstraction which allows the application layer to hide the complexities associated with performing tasks at the system level.

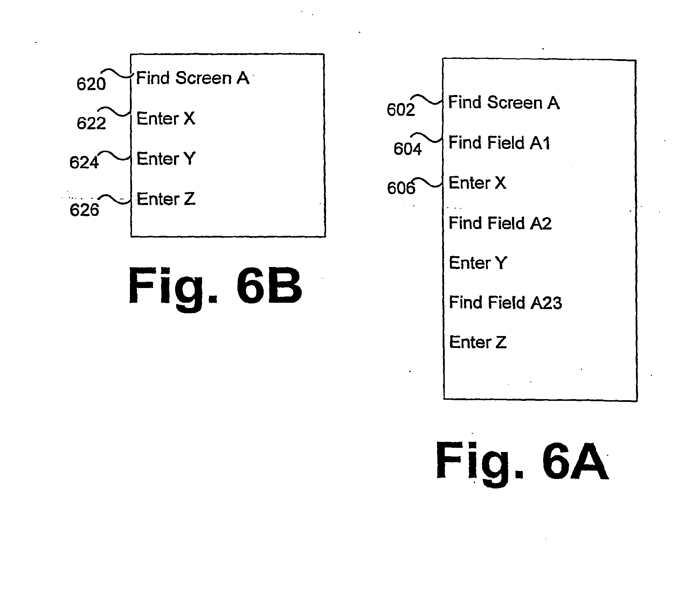

To elaborate, Fig. 6A illustrates a programming script 600 in accordance with one embodiment of the invention. The programming script 600 can be written, for example, using the Java-based programming interface 330 to interact with the GUI 336 of the deployment tool 302 shown in Fig. 3. As will be appreciated, the programming script 600 hides the complexities associated with performing tasks at the system level. Accordingly, it is possible to use high level functions such as finding a particular screen, finding a particular field in that screen and entering a specified value in that field. For example, a series of high level functions 602, 604 and 606 can respectively be used to find a particular screen, find a particular field in that screen, and enter a particular value in that field.

It should be noted that it is also possible to reduce the number of operations need to write a programming script. For example, if the arrangement of the fields in the screen are known and/or remains constant, there is no need to find particular fields in the screen. As such, as illustrated in programming script 650 of Fig. 6B, the values for the fields in the screen can be entered in a sequence of high level functions 620, 622, 624 and 626 which respectively find a screen A and serially enter the values X, Y and Z in the fields of the screen A.

In accordance with one embodiment of the invention disclosed hereinafter are exemplary Java interfaces which can be used to implement a class "script runner" and a class "Ejb Wizard". The class "script runner" represents a system level interface. The class "Ejb Wizard represents an application level interface. As will be appreciated by those skilled in the art, these classes can be used to provide a Java programming interface for a Java deployment tool.

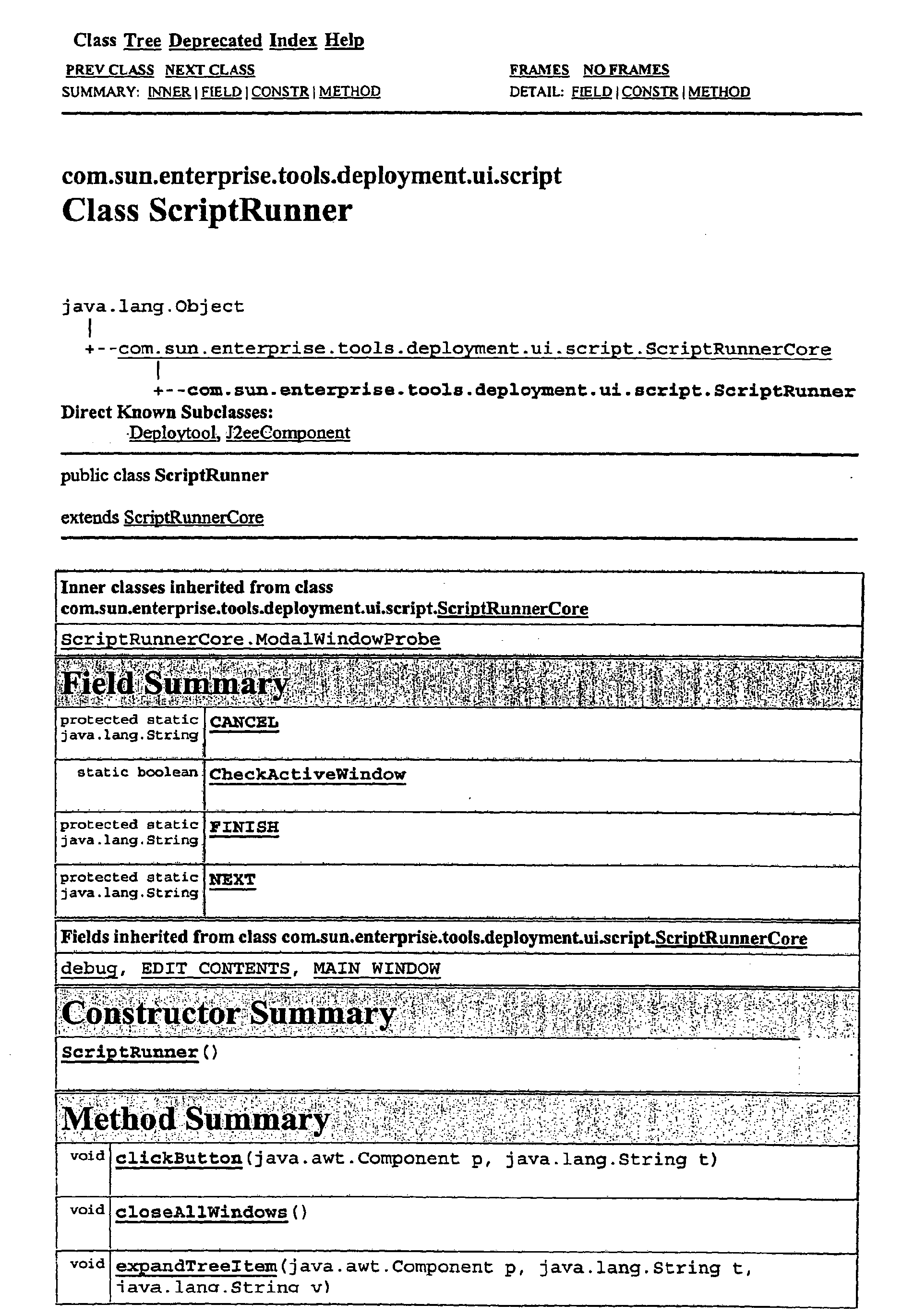

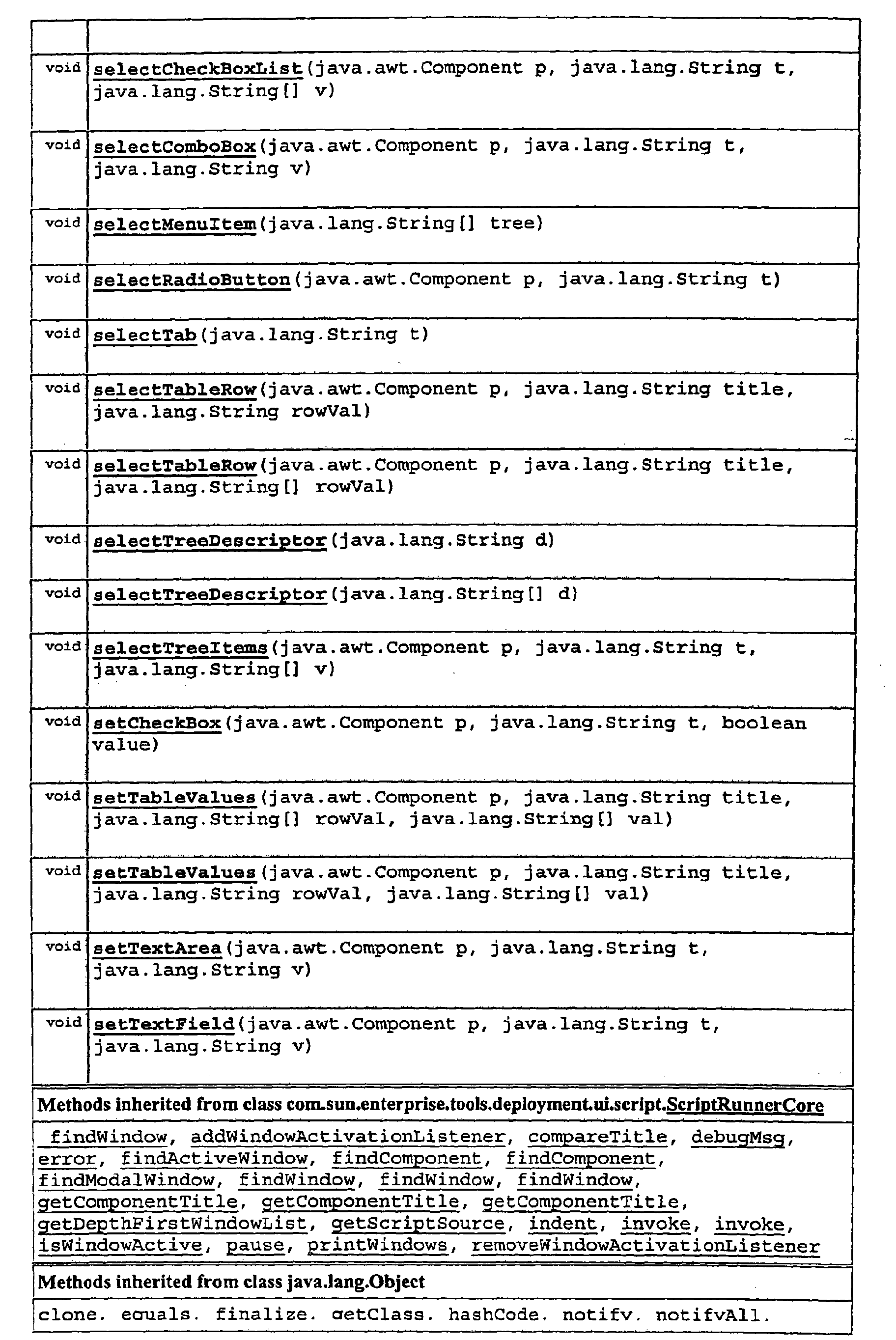

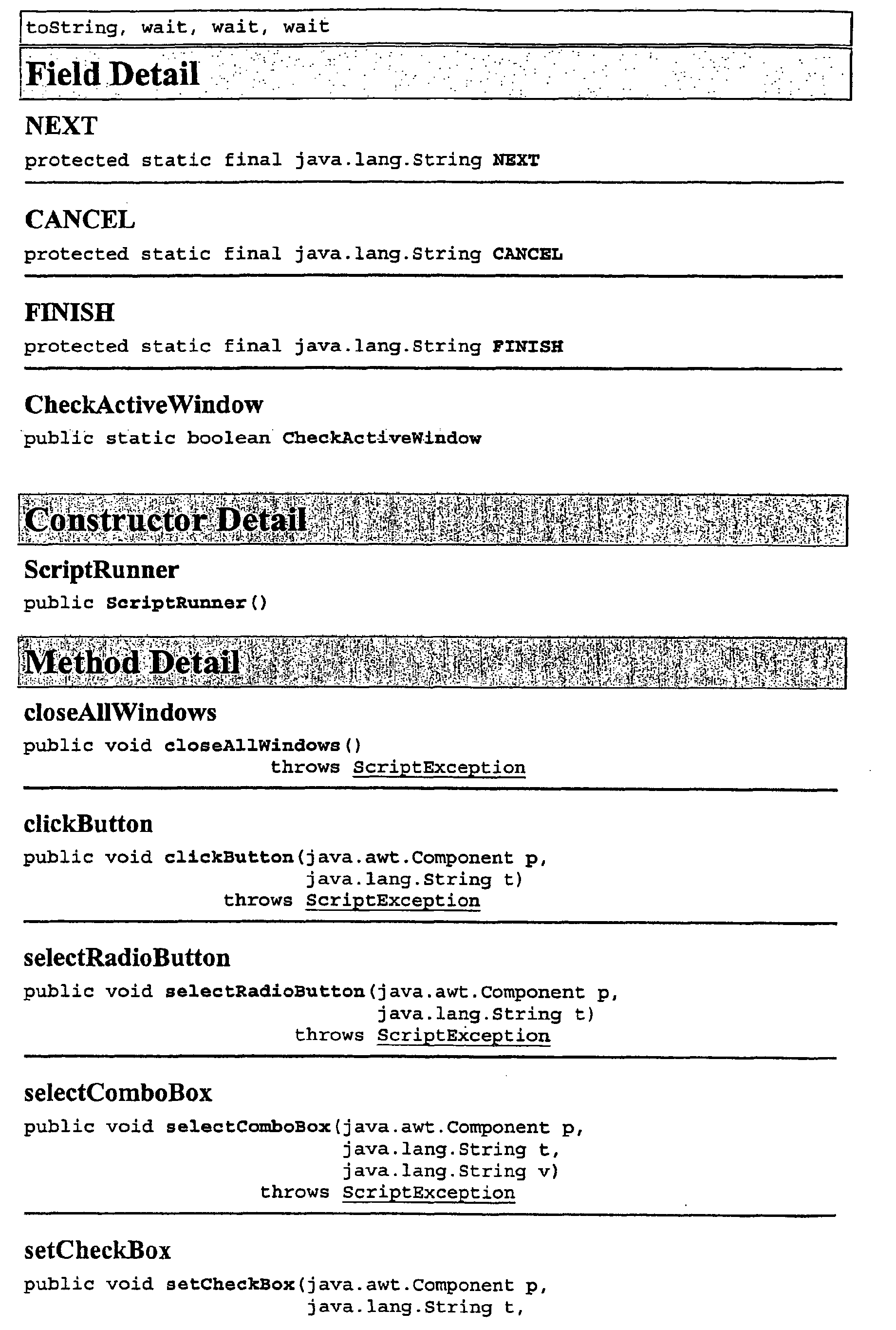

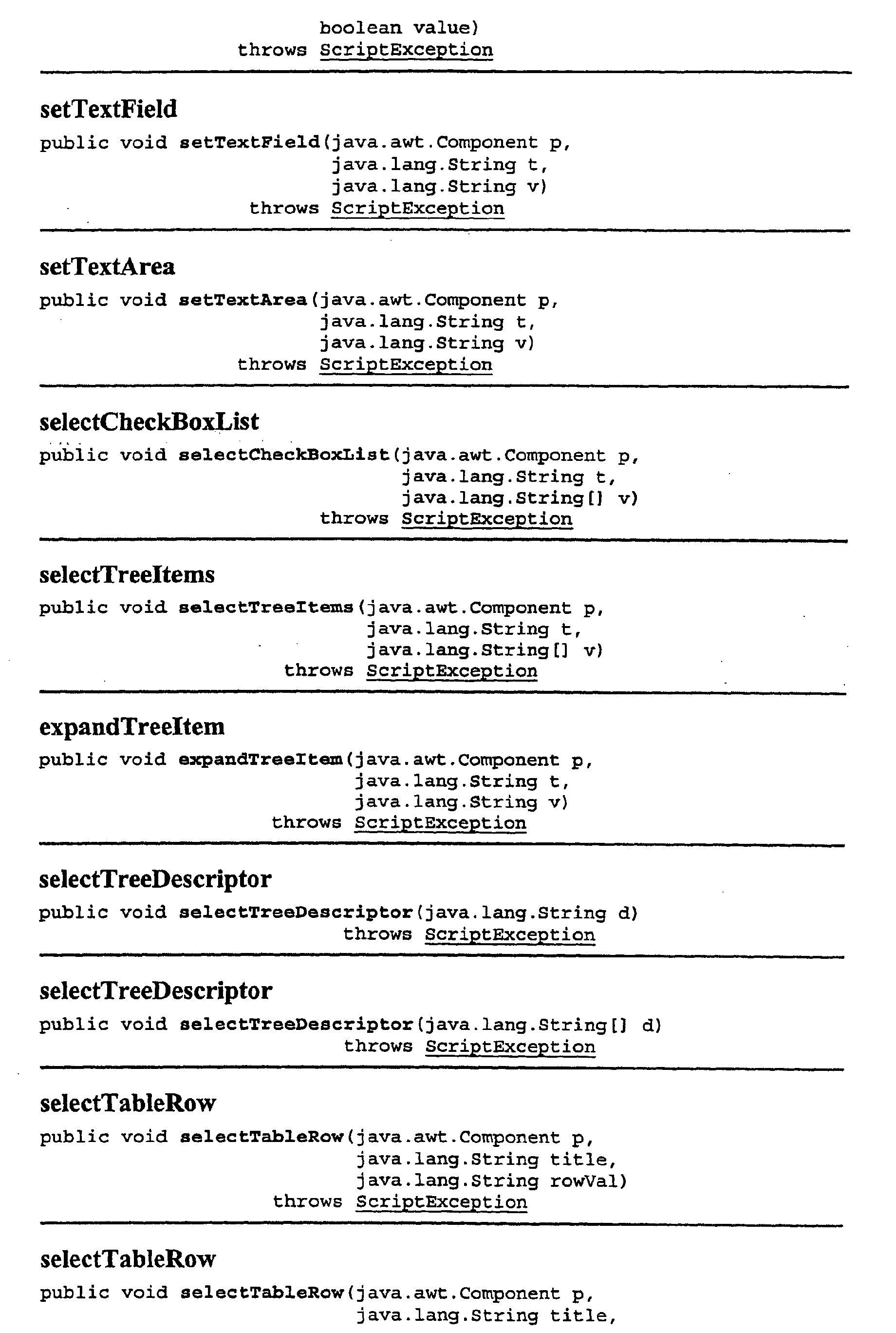

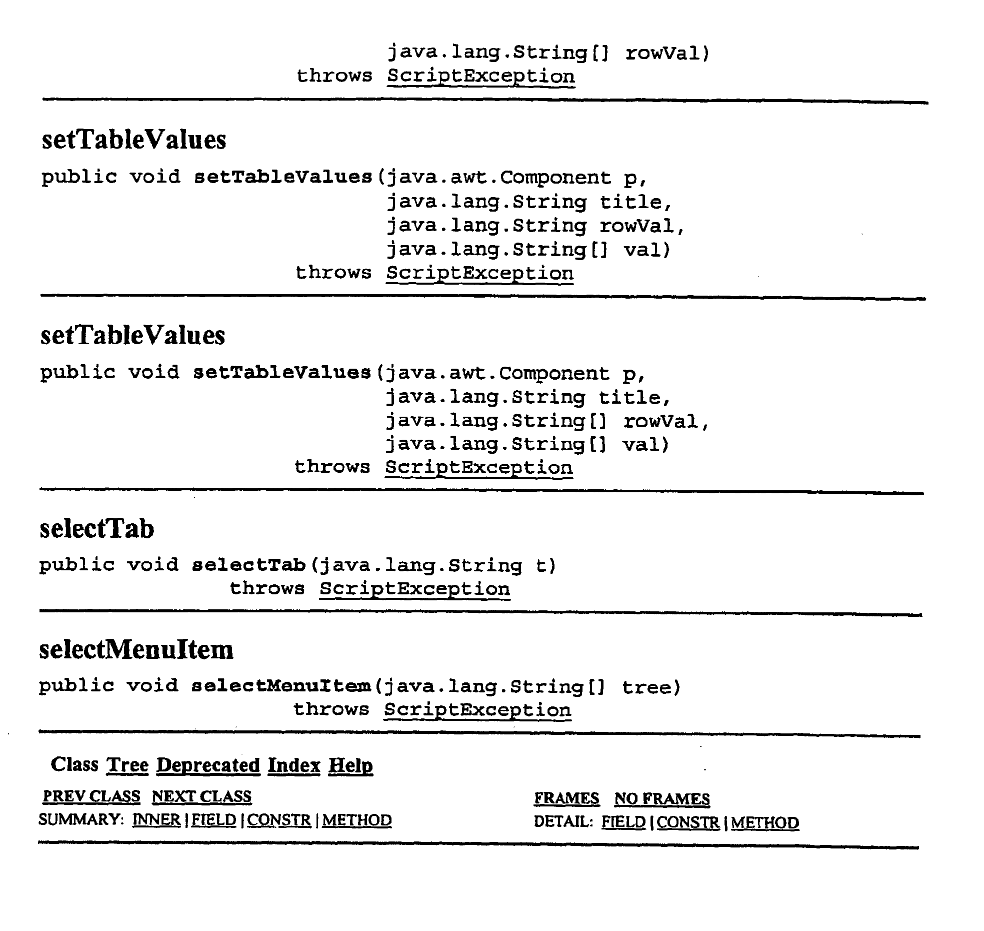

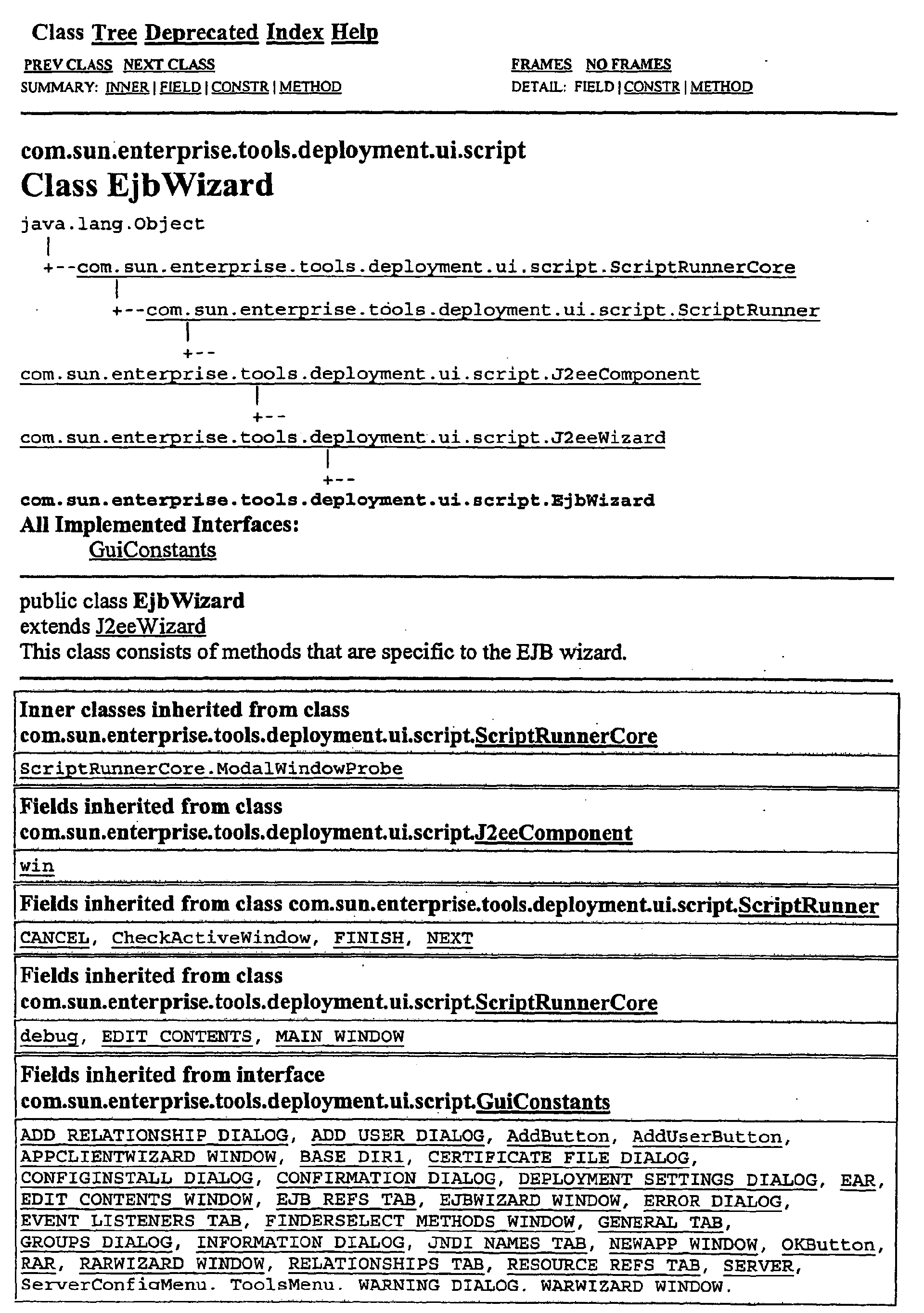

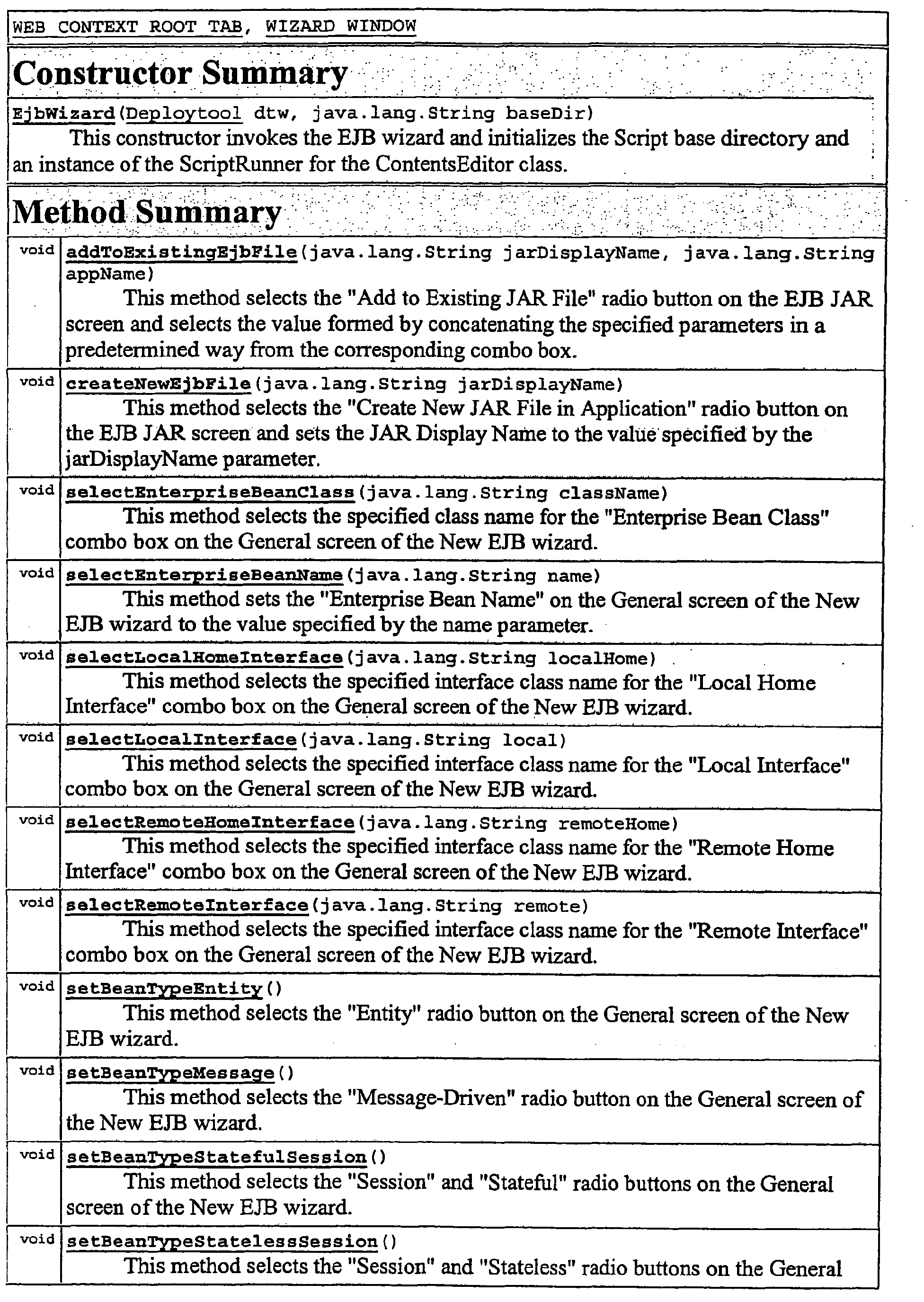

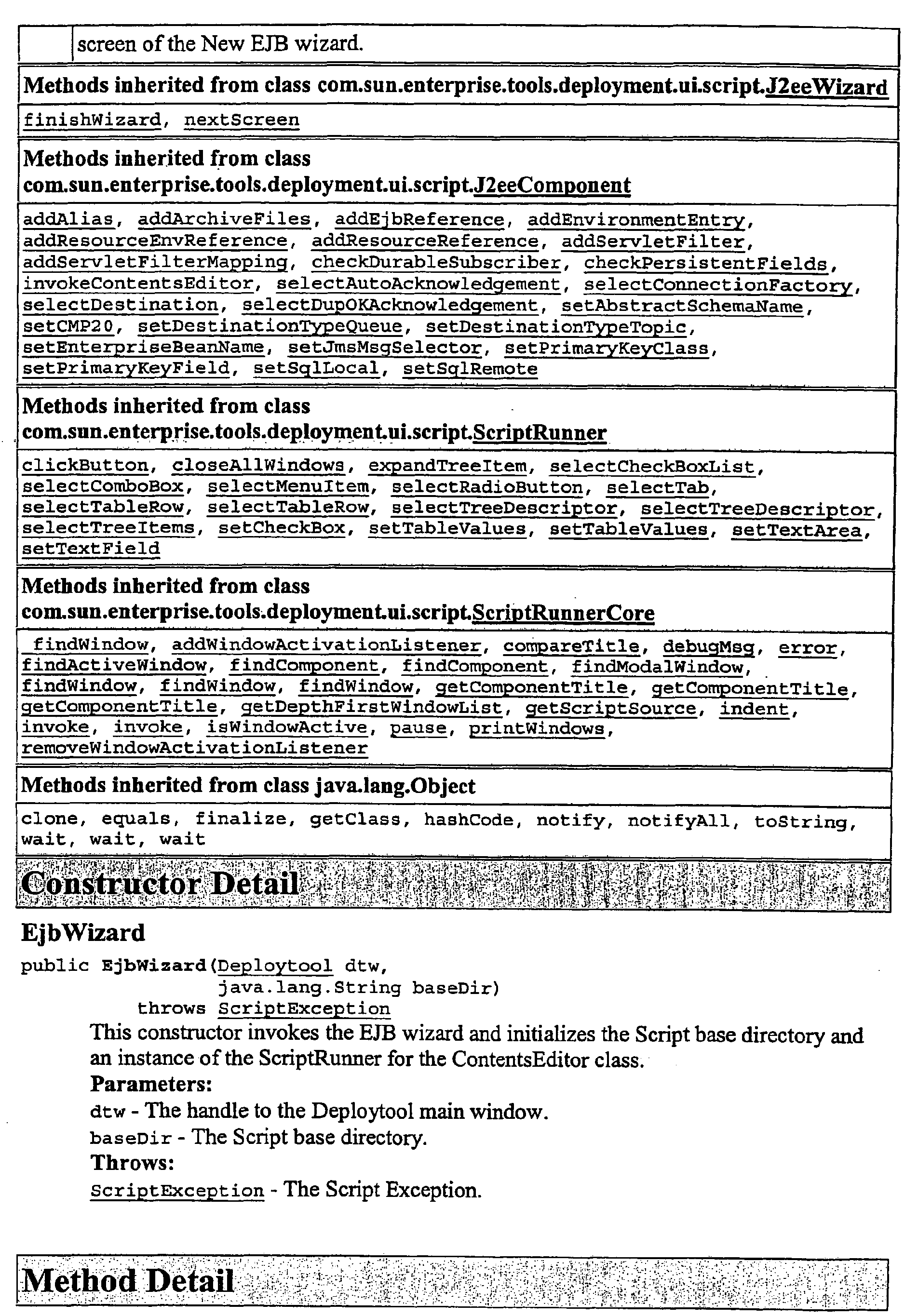

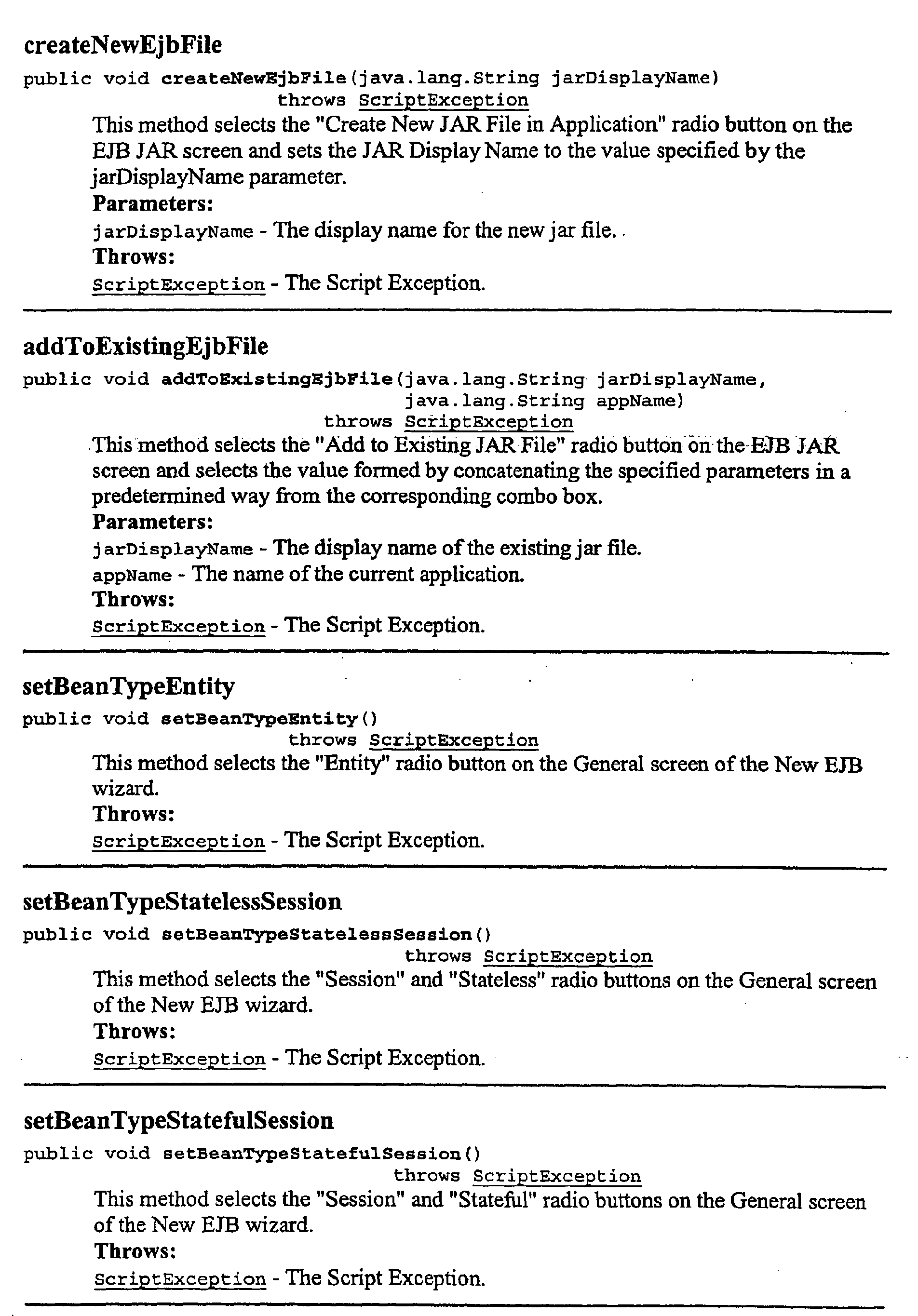

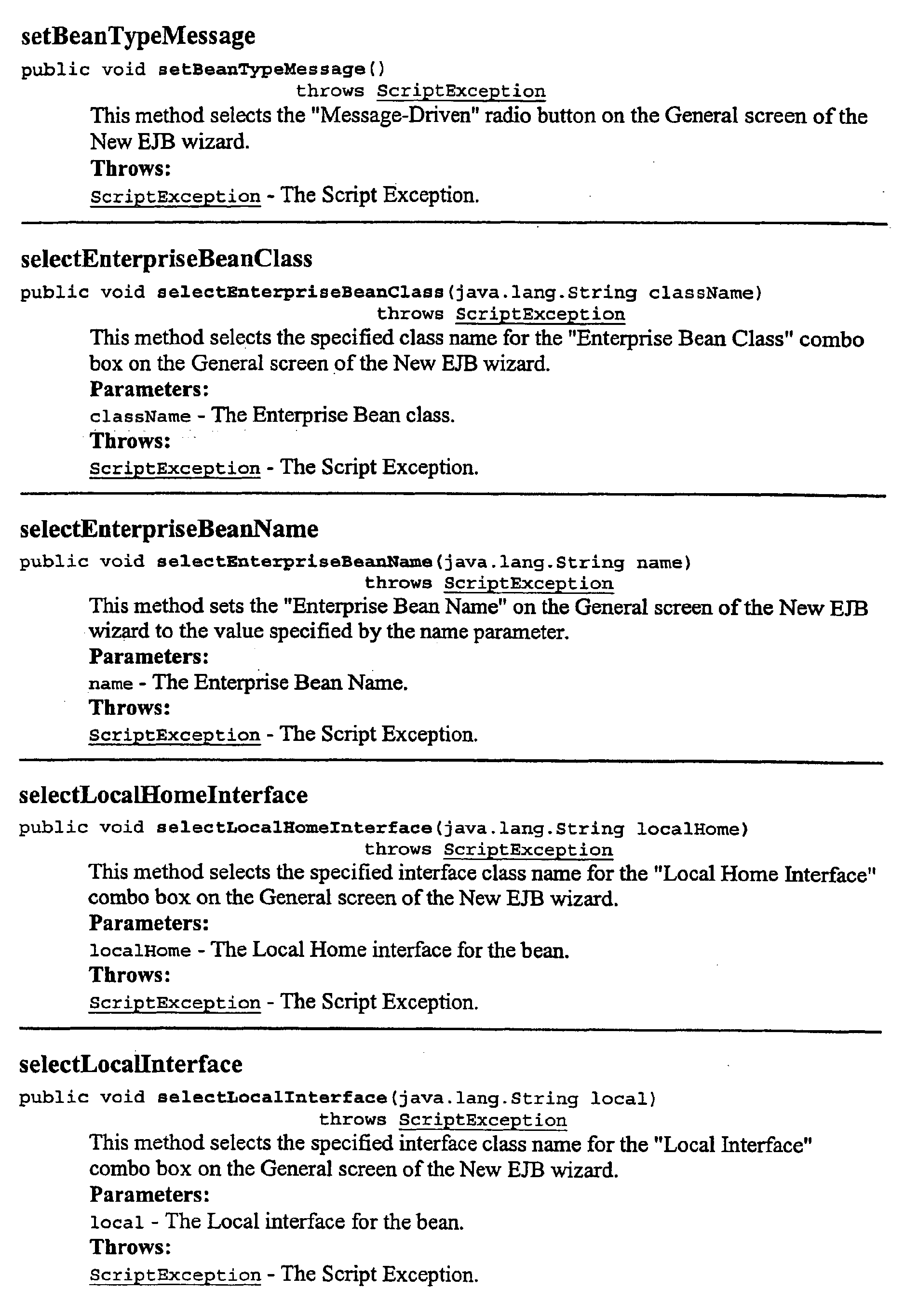

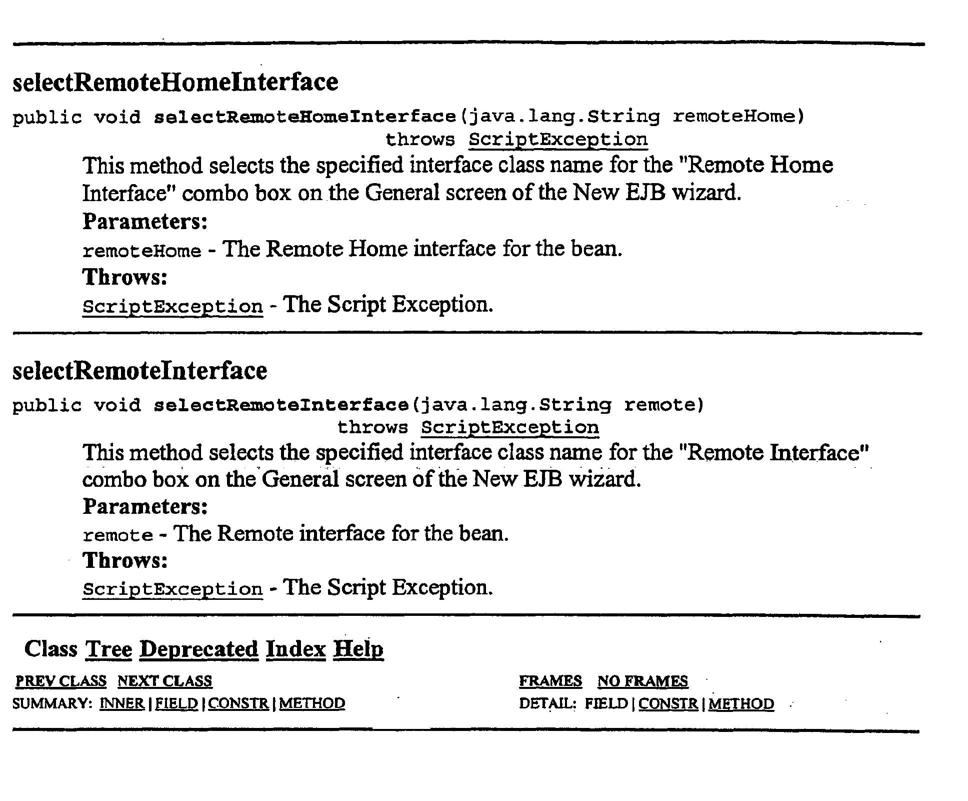

## Claims

1. In a Java computing environment, a Java Programming Interface capable of interacting with a Java GUI-based tool,
wherein said Java GUI-based tool provides a GUI which can be used to perform one or more operations relating to one or more components operating in said Java computing environment;
wherein said Java Programming Interface provides at least one functionality which can be used to perform at least one operation associated with interaction with said GUI of said Java GUI-based tool; and
wherein said at least one operation can also be performed by interacting with said GUI of said Java GUI-based tool.

2. A Java Programming Interface as recited in claim 1, wherein said Java Programming interface is capable of being used to write programming scripts.

3. A Java Programming Interface as recited in claim 1, wherein said programming script is a test script which can be used to test said Java GUI-based tool.

4. A Java Programming Interface as recited in claim 1, wherein said programming script is a tutorial script for said GUI-based tool.

5. A Java Programming Interface as recited in claim 1,
wherein said Java GUI-based tool is a Java deployment tool; and
wherein said one or more Java components are one or more WEB applications.

6. A Java Programming Interface as recited in claim 1,
wherein said Java GUI-based tool is a Java deployment tool; and
wherein said one or more Java components can be one or more of the following components: an Enterprise Java Bean, a client application, a resource adaptor, and a WEB application.

7. A Java Programming Interface as recited in claim 1, wherein said Java Programming Interface comprises:
a Java-based Programming Interface which can be used to simulate interactions with said Java GUI-based deployment tool;
a Java-based system layer which can operate to implement said one or more interactions with said at least one screen.

8. A Java Programming Interface as recited in claim 1, wherein said at least one functionality is an operation which can be performed by a user when interacting with a screen generated by said GUI of said GUI-based tool.

9. A Java Programming Interface as recited in claim 8, wherein said at least one functionality is finding a screen or field in a screen, or entering a value in a field in a screen, said screen being capable of being generated by said GUI of said Java-based tool.

10. In a Java computing environment, a Java Programming Interface capable of interacting with a Java deployment tool,
wherein said Java deployment tool provides a GUI which can be used to perform one or more operations relating to one or more components in said Java computing environment; said one or more operations including deployment of said one or more components in said Java computing environment;
wherein said Java Programming Interface provides at least one functionality which can be used to perform at least one operation relating to deployment of said one or more components;
wherein said at least one operation can also be performed by a user of said Java deployment tool by interacting with said GUI.

11. A Java Programming Interface as recited in claim 10, wherein said Java Programming Interface is capable be being used to write programming scripts.

12. A Java Programming Interface as recited in claim 11, wherein said programming script is a test script which can be used to test said Java deployment tool.

13. A Java Programming Interface as recited in claim 11, wherein said programming script is a tutorial script for said Java deployment tool.

14. A Java Programming Interface as recited in claim 11,
wherein said one or more Java components are one or more WEB applications.

15. A Java Programming Interface as recited in claim 11, wherein said one or more Java components can be one or more of the following components: an Enterprise Java Bean, a client application, a resource adaptor, and a web application.

16. A Java Programming Interface as recited in claim 11, wherein said Java Programming Interface comprises:
a Java-based Programming Interface which can be used to simulate interactions with one or more screens which can be generated using said GUI of said Java deployment tool; and
a Java-based system layer which can operate to implement said one or more interactions.

17. A Java Programming Interface as recited in claim 16 wherein said at least one functionality is finding a screen or field in a screen, or entering a value in a field in a screen, said screen being capable of being generated by said GUI of said Java deployment tool.

18. A computing system capable of using a Java Programming Interface which can be used to interact with a Java deployment tool in a Java computing environment;
wherein said Java deployment tool provides a GUI which can be used to perform one or more operations relating to one or more components in said Java computing environment; said one or more operations including deployment of said one or more components in said Java computing environment;
wherein said Java Programming Interface provides at least one functionality which can be used to perform at least one operation relating to deployment of said one or more components;
wherein said at least one operation can also be performed by a user of said Java deployment tool by interacting with said GUI.

19. A computing system as recited in claim 18, wherein said Java Programming interface is capable of being used to write programming scripts.

20. A computing system as recited in claim 18, wherein said programming script is a test script which can be used to test said Java deployment tool.

21. A computing system as recited in claim 18, wherein said programming script is a tutorial script for said Java deployment tool.

22. A computing system as recited in claim 18, wherein said one or more Java components are one or more WEB applications.

23. A computing system as recited in claim 18, wherein said one or more Java components can be one or more of the following components: an Enterprise Java Bean, a client application, a resource adaptor, and a web application.

24. A computing system as recited in claim 18, wherein said Java Programming Interface comprises:
a Java-based Programming Interface which can be used to simulate interactions with one or more screens which can be generated using said GUI of said Java deployment tool; and
a Java-based system layer which can operate to implement said one or more interactions.

25. A computing system as recited in claim 18, wherein said at least one functionality is finding a screen or field in a screen, or entering a value in a field in a screen, said screen being capable of being generated by said GUI of said Java deployment tool.

26. A computer readable medium including computer program code for a Java Programming Interface which can be used to interact with a Java deployment tool in a Java computing environment;
wherein said Java deployment tool provides a GUI which can be used to perform one or more operations relating to one or more components in said Java computing environment; said one or more operations including deployment of said one or more components in said Java computing environment;
wherein said Java Programming Interface provides at least one functionality which can be used to perform at least one operation relating to deployment of said one or more components;
wherein said at least one operation can also be performed by a user of said Java deployment tool by interacting with said GUI.

27. A computer readable medium as recited in claim 26, wherein said Java Programming Interface is capable of being used to write programming scripts.

28. A computer readable medium as recited in claim 26, wherein said programming script is a test script which can be used to test said Java deployment tool.

29. A computer readable medium as recited in claim 26, wherein said programming script is a tutorial script for said Java deployment tool.

30. A computer readable medium as recited in claim 26, wherein said one or more Java components are one or more WEB applications.

31. A computer readable medium as recited in claim 26, wherein said one or more Java components can be one or more of the following components: an Enterprise Java Bean, a client application, a resource adaptor, and a WEB application.

32. A computer readable medium as recited in claim 26, wherein said Java Programming Interface comprises:
a Java-based Programming Interface which can be used to simulate interactions with one or more screens which can be generated using said GUI of said Java deployment tool; and
a Java-based system layer which can operate to implement said one or more interactions.

33. A computer readable medium as recited in claim 26, wherein said at least one functionality is finding a screen or field in a screen, or entering a value in a field in a screen, said screen being capable of being generated by said GUI of said Java deployment tool.
